# EUROPEAN PATENT APPLICATION

(11) **EP 0 993 764 A1**
(43) Date of publication of application: **19.04.2000**
(21) Application number: 99850143.1
(22) Date of filing: 01.10.1999
(51) Int. Cl.: A01F 12/40

(54) **Arrangement in spreader**

(30) Priority: 16.10.1998 SE 9803556
(71) Applicant: REKORDVERKEN SWEDEN AB, 535 92 Kvänum (SE)
(72) Inventor: Holmén, Bengt, 532 74 Skara (SE); Brax, Claes, 534 03 St. Levene (SE)
(74) Representative: Franzén, Lars Hjalmar

(57) **Abstract**

In a spreader (2) associated with the cutting machine (3) of a combine harvester (1) and adapted to spread the cutting material (5), the spreader (2) has an upper wall (9) which is connected to an outlet (6) of the cutting machine (3) and under which a plurality of spreader wings (11) are pivotally mounted for adjustment of the spreading width of the cutting material (5). The spreader wings (11) are adjustable in the transverse direction (B) at their front ends (14) facing the outlet (6) by means of an adjusting mechanism (15) and are, between their front and rear ends (14, 16), vertically pivotally mounted in the wall (9) by means of bearing elements (17). A cover plate (30) is arranged on the underside of the wall (9) and extends in the transverse direction (B) between the front ends (14) of the spreader wings (11) and the outlet (6) of the cutting machine (3) to protect the bearing means (20) from being soiled by the cutting machine.

## Description

### TECHNICAL FIELD

The present invention relates to an arrangement in a spreader associated with a cutting machine and adapted to spread chopped cutting material, coming from the cutting machine, over a ground, the spreader having an upper wall, which is connected to an outlet of the cutting machine and under which a plurality of spreader wings are pivotally mounted for adjustment of the spreading width of the cutting material over the ground, said spreader wings being juxtaposed and extending substantially downwards-backwards from the outlet.

In the preferred embodiment of the invention, which is described and shown in the present application, the cutting machine is suitably a straw chopper, preferably a flail chopper, which is part of a combine harvester. The cutting material is preferably formed of ordinary, dry straw, usually from wheat, barley, rye and oats. However, the cutting material can also consist of, for instance, maize, sunflower etc, which has fairly large and stiff plant parts.

In a straw chopper connected to a combine harvester, it is desirable that the spreader wings of the spreader after the straw chopper should be adjustable in such manner that the spreading width over the ground can be adjusted and/or side wind can be compensated for.

### BACKGROUND OF THE INVENTION

An arrangement of the kind stated by way of introduction is known from EP 0212270. In the arrangement, which is shown and described in the same, the spreader wings are pivotable on pivot pins at their front end or front edge facing the cutting machine or the chopper. At a distance from the pivot pins, the spreader wings are at the same time connected with guide pins, which extend through guiding slots in the upper wall and are connected with an adjusting strut. This means that the spreader wings are adjustable in the transverse direction at their rear end or rear edge, which results in a number of serious drawbacks.

In order to be able to increase and decrease the spreading width from the normal adjustment, in which the spreading wings are directed substantially straight backwards, the spreader wings must receive a greater and a smaller quantity, respectively, of chopped cutting material to be spread. This is not possible to achieve, as the spreader wings in the prior-art device are adjusted at the rear edge.

Since, for the adjustment of the spreader wings in the transverse direction, the guide pins, which extend through the guiding slots, are arranged at a distance downstream of their pivot pins located at the front edge, the guide pins are heavily exposed to soiling and get covered with chopped cutting material coming from the cutting machine. Gradually, this results in jamming of the guide pins and they may even get stuck, which makes it more and more difficult or even impossible to carry out the adjustment of the spreader wings.

### OBJECT OF THE INVENTION

The main object of the invention is primarily to alleviate the above-mentioned disadvantages and provide an arrangement, which, by means of a simple and reliable structure, yields improved and easier adjustment of the spreading width of the cutting material over the ground.

### SUMMARY OF THE INVENTION

According to the invention, the main object is achieved by the spreader wings being adjustable in the transverse direction at their front ends facing the outlet of the cutting machine by means of an adjusting mechanism and being substantially vertically pivotally mounted between their front and rear ends in the upper wall by means of bearing elements.

### BRIEF DESCRIPTION OF THE DRAWINGS

The invention will now be described in more detail with reference to the accompanying drawings showing an embodiment which is particularly preferred at present. In the drawings
Fig. 1 is a schematic side view of the rear part of a combine harvester having a spreader which is placed after or downstream of a chopper and which has an arrangement according to the invention,
Fig. 2 shows the area within the circle II in Fig. 1 on a larger scale, and
Figs 3-5 are plan views of the spreader according to Fig. 1 including spreader wings in various adjustment positions for normal, maximum and minimum spreading.

### DETAILED DESCRIPTION OF A PREFERRED EMBODIMENT

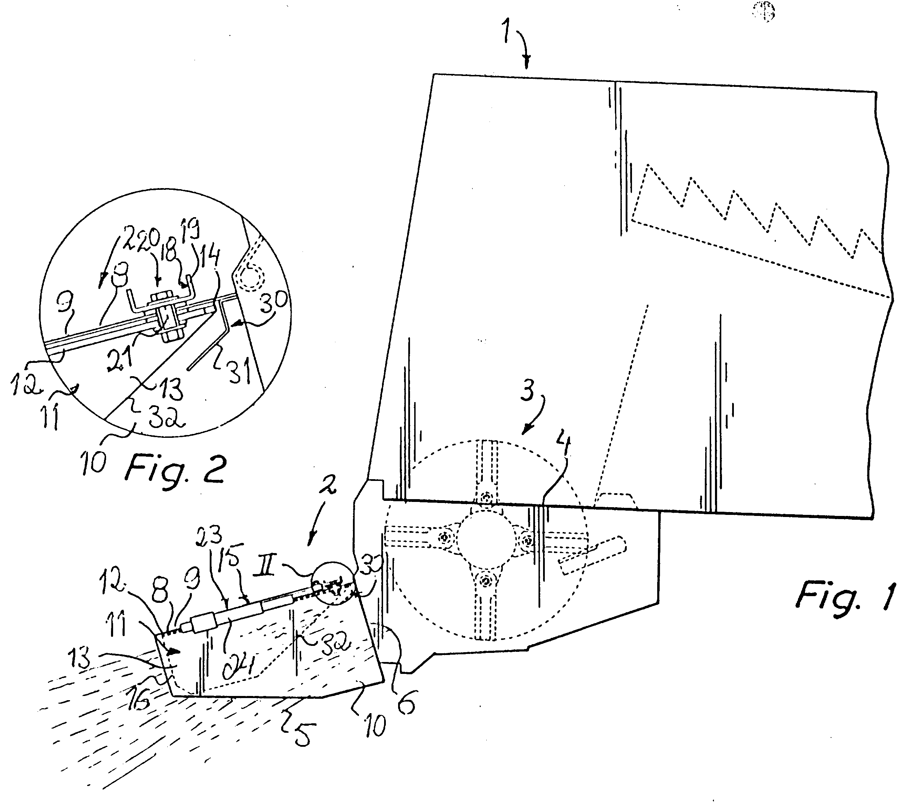

The combine harvester, which is generally designated 1 and partly shown in Fig. 1, has a conventional structure, except for a spreader which is generally designated 2, and therefore its design and function will not be described in more detail.

The combine harvester 1 is, among other things, provided with a cutting machine 3 in the form of a straw chopper, preferably a flail chopper, of prior-art design. The cutting machine 3 is placed in the usual manner at the rear end of the combine harvester 1 seen in the advancing direction A. The cutting machine 3 has an inlet 4 for threshed but unchopped cutting material 5, usually straw from wheat, barley, rye and oats as well as various kinds of oil plants, maize, sunflower etc, and an outlet 6 for the chopped and comminuted cutting material 5.

The main function of the spreader 2 is to spread the chopped cutting material 5, coming from the cutting machine 3 through its outlet 6, over a ground 7, in this case a field.

More specifically, the spreader 2, in the shown and described embodiment, has substantially the form of an open nozzle 8 which is directed backwards and downwards-backwards. The nozzle 8 has an upper, substantially horizontal wall 9 and two substantially vertical side walls 10. The wall 9 and the side walls 10 are suitably made of sheet metal or some other material which is fairly rigid and are connected to the outlet 6 of the cutting machine 3 in some suitable, conventional manner.

Under the upper wall 9 and, in this case, also between the side walls 10, a plurality of spreader wings 11, in this case ten, are arranged, said spreader wings preferably being made of the same material as the wall 9 and the side walls 10, i.e. of sheet metal or the like. The spreader wings 11 are pivotally mounted in the upper wall 9, in a manner described below, for adjustment of the spreading width of the chopped cutting material 5 over the ground 7. The spreader wings 11 are placed substantially in parallel beside each other and have an L profile with two horizontal and vertical flanges 12 and 13 which are arranged substantially perpendicularly to each other. The horizontal flange 12 on each spreader wing is a relatively narrow attachment flange (see below), while the vertical flange 13 extends downwards-backwards from the outlet 6 and constitutes the actual wing, which is comparatively wide.

More specifically, the spreader wings 11 are adjustable in the transverse direction or in the lateral direction at their front ends or front edges 14 facing the outlet 6 of the cutting machine 3 by means of an adjusting mechanism which is described in more detail below and generally designated 15. Between their front and rear ends or front and rear edges 14 and 16, the spreader wings 11 are substantially vertically pivotally mounted, via their horizontal flanges 12, in the upper wall 9 by means of bearing elements 17.

The adjusting mechanism 15 can be designed in various ways, but in the preferred embodiment it comprises a connection element 18, which extends in the transverse direction B of the spreader 2, and thus also of the combine harvester 1 and the cutting machine 3, i.e. perpendicularly to the advancing direction A, and which is located on top of the upper wall 9 of the spreader 2. This element 18 suitably has the form of an elongated strut 19, for instance, a U-section made of steel or the like, and is connected to the front ends 14 of the spreader wings 11 with the aid of bearing means 20. In this embodiment, the bearings means 20 have the form of guide pins 21, which are arranged, preferably adjustably mounted, on the connection element 18 and on the horizontal attachment flanges 12 of the spreader wings 11 at the front ends 14 of the spreader wings. The guide pins 21 extend through guiding slots 22 in the upper wall 9, said guiding slots extending in the transverse direction B and being aligned with each other.

Moreover, the adjusting mechanism 15 comprises an actuator 23, which can be manually, hydraulically, pneumatically or electrically operated. In this case, the actuator 23 is formed of a hydraulic cylinder 24, which is driven by a pump (not shown) via ducts (not shown either). The hydraulic cylinder 24 is articulated to one, in this case the outer, end of the connection element 18 by means of an angle lever 25 which is pivotably mounted on the upper wall 9 of the spreader 2. As a result, the connection element 18 and thus the front ends 14 of the spreader wings 11 can be moved back and forth in the transverse direction, as indicated by the double arrow C.

As concerns the bearing elements 17 for the pivotal mounting of the spreader wings 11 in the upper wall 9 of the spreader 2 between the front and rear ends 14, 16 of the wings 11, they suitably have the form of bearing pins 26. The bearing pins 26 connect the upper wall 9 to the horizontal attachment flanges 12 of the spreader wings 11 and extend through apertures 27, which are located opposite to each other in the wall 9, and the flanges 12.

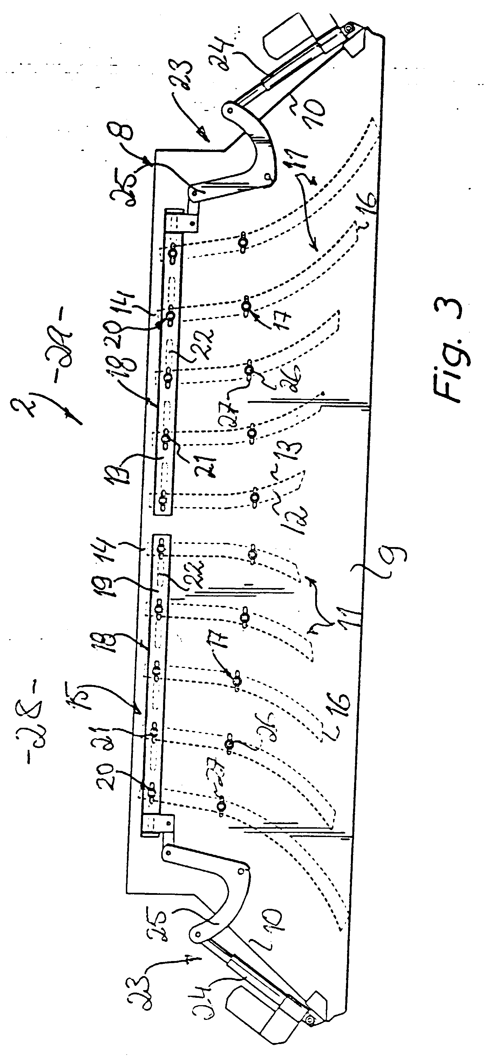

All the spreader wings 11 can be adjusted by means of one connection element 18 and one actuator 23. However, in order to allow a more flexible adjustment of the spreader wings 11 in view of the desired spreading width and spreading pattern as well as the side wind and inclination of the ground 7 etc, it is preferable, as shown in Figs 3-5, to divide the spreader wings 11 into a left-hand group 28 and a right-hand group 29, each group, in this case, having five spreader wings. Each group 28, 29 has a connection element 18 and an actuator 23 for separate adjustment of the groups 28, 29.

In order to efficiently protect the bearing means 20 formed of the guide pins 21 and the associated components from being soiled and obstructed by the chopped cutting material 5, coming from the cutting machine 3 through the outlet 6, and by dirt possibly carried along, a cover 30 is arranged on the underside of the upper wall 9 of the spreader 2. Suitably, the cover 30 extends in the transverse direction B between the front ends 14 of the spreader wings 11 and the outlet 6 of the cutting machine 3. In the preferred embodiment, the cover 30 has the form of an elongated plate 31 made of metal or some other suitable material. The plate 31 is attached in a suitable manner, e.g. by welding, riveting, to the underside of the upper wall 9 adjacent to the outlet 6 of the spreader. Alternatively, the plate 31 can be attached to the cutting machine 3 adjacent to its outlet 6. In any case, the plate 31 is suitably angled downwards-backwards in front of the front ends 14 of the spreader wings 11, as shown in Fig. 2. It may also be suitable to bevel the lower edge of the spreader wings, as shown at 32 in Figs 1 and 2.

In order to further enhance the flexibility in the adjustment of the spreader wings 11 in the transverse direction B, they can be arranged so as to move progressively to a greater extent in the transverse direction B, seen from the centrally placed spreader wings towards the outer ones or, in other words, seen from the centre of the upper wall 9 towards its outer edges or the side walls 10. In practice, this can be achieved by the distances D between the bearing elements 17 and the bearing means 20 being different between the adjacent spreader wings 11, decreasing from the centre towards the outer edges of the upper wall 9.

As an additional measure taken to increase the flexibility, above all to increase the spreading width, the spreader wings can be of different lengths and curved outwards-backwards, as shown in Figs 3-5, the shortest and least curved ones being arranged in the centre and the progressively longer and more curved ones being arranged towards the outer edges or the side walls 10.

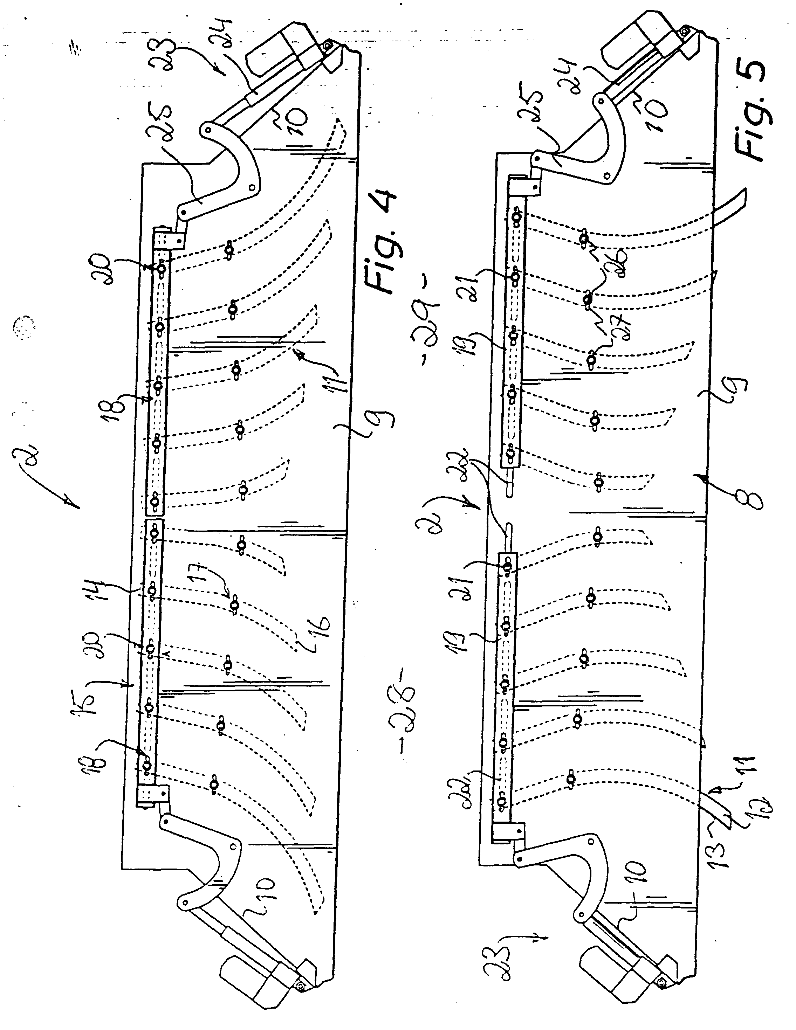

For the sake of completeness, it should be mentioned that Fig. 3 shows the spreader wings 11 in the normal spreading position, while Fig. 4 shows them in a position for maximum spreading and Fig. 5 in a position for minimum spreading. All positions in between are possible, and the left-hand group 28 can be adjusted between these positions completely separately from the right-hand group 29 and vice versa.

It goes without saying that the invention should not be considered to be limited to the embodiment, which is described above and shown in the drawings, and it can be modified in optional manner within the scope of protection of the appended claims.

## Claims

1. An arrangement in a spreader (2) associated with a cutting machine (3) and adapted to spread chopped cutting material (5), coming from the cutting machine, over a ground (7), the spreader (2) having an upper wall (9), which is connected to an outlet (6) of the cutting machine (3) and under which a plurality of spreader wings (11) are pivotally mounted for adjustment of the spreading width of the cutting material (5) over the ground (7), said spreader wings (11) being juxtaposed and extending substantially downwards-backwards from the outlet (6), **characterised** in that the spreader wings (11) are adjustable in the transverse direction (B) at their front ends (14) facing the outlet (6) of the cutting machine (3) by means of an adjusting mechanism (15) and are, between their front and rear ends (14, 16), substantially vertically pivotally mounted in the upper wall (9) by means of bearing elements (17).

2. An arrangement according to claim 1, **characterised** in that the adjusting mechanism (15) comprises a connection element (18), which extends in the transverse direction (B) and which is connected to the front ends (14) of the spreader wings (11) with the aid of bearing means (20), and an actuator (23), which is connected to the connection element (18) for moving the connection element (18) and thus the front ends (14) of the spreader wings (11) back and forth in the transverse direction (B).

3. An arrangement according to claim 2, **characterised** in that the connection element (18) is located on top of the upper wall (9), and that the bearing means (20) have the form of guide pins (21), which are arranged on the connection element and the front ends (14) of the spreader wings (11) and which extend through guiding slots (22) in the upper wall (9), said guiding slots extending in the transverse direction (B) and being aligned with each other.

4. An arrangement according to claim 2 or 3, **characterised** in that the connection element (18) has the form of an elongated strut (19), and that the actuator (23) is connected to one end of the strut.

5. An arrangement according to any one of the preceding claims, **characterised** in that the bearing elements (17) for the pivotal mounting of the spreader wings (11) in the upper wall (9) between their front and rear ends (14, 16) have the form of bearing pins (26), which connect the upper wall to the spreader wings and extend through apertures (27) in the same which are located opposite to each other.

6. An arrangement according to any one of claims 2-5, **characterised** in that the spreader wings (11) are divided into a left-hand group (28) and a right-hand group (29) each having a connection element (18) and an actuator (23) for separate adjustment of the groups (28, 29).

7. An arrangement according to any one of claims 2-6, **characterised** in that the actuator (23) is manually, hydraulically, pneumatically or electrically operated.

8. An arrangement according to any one of the preceding claims, **characterised** in that a cover (30) is arranged on the underside of the upper wall (9) and extends in the transverse direction (B) between the front ends (14) of the spreader wings (11) and the outlet (6) of the cutting machine (3) to protect the bearing means (20) from being soiled by the cutting machine.

9. An arrangement according to any one of the preceding claims, **characterised** in that the cover (30) has the form of an elongated plate (31) which is attached to the underside of the upper wall (9) and which is angled downwards-backwards in front of the front ends (14) of the spreader wings (11).

10. An arrangement according to any one of the preceding claims, **characterised** in that the distances (D) between the bearing elements (17) and the bearing means (20) are different on the adjacent spreader wings (11), decreasing from the centre towards the outer edges of the upper wall (9), so that the spreader wings (11) in the adjustment in the transverse direction (B) move progressively to a greater extent from the centre of the upper wall (9) towards its outer edges.
